# EUROPEAN PATENT SPECIFICATION

(11) **EP 1 715 299 B1**
(45) Date of publication and mention of the grant of the patent: **09.01.2013**
(21) Application number: 06007413.5
(22) Date of filing: 07.04.2006
(51) Int. Cl.: G01D 5/353, B60R 21/0136, G01D 5/26

(54) **Optical fiber sensor for vehicle**
Glasfasersensor für ein Fahrzeug
Capteur de fibre optique pour véhicule

(30) Priority: 11.04.2005 JP 2005113642
(43) Date of publication of application: 25.10.2006
(73) Proprietor: DENSO CORPORATION, Kariya-city, Aichi-pref. 448-8661 (JP); Toyota Jidosha Kabushiki Kaisha, Toyota-city, Aichi-pref 471-8571 (JP)
(72) Inventor: Suzuki, Akira, Kariya-city Aichi-pref., 448-8661 (JP); Miyata, Yujiro, Toyota-city Aichi-pref., 471-8571 (JP); Takahashi, Hiroyuki, Toyota-city Aichi-pref., 471-8571 (JP)
(74) Representative: Kuhnen & Wacker

(56) References cited:
- US-A- 4 870 269
- US-A1- 2005 006 151
- US-B1- 6 271 747

## Description

The present invention relates to an optical fiber sensor for a vehicle, particularly, relates to the vehicle optical fiber sensor mounted to a bumper of the vehicle for detecting a contact of the bumper with an object.

In recent years, vehicles have been designed to improve safety at a time of accident. Regarding the safety of the vehicles, it is required to improve not only the safety of passengers but also the safety of a pedestrian who is collided by a vehicle, at the time of accident. It is proposed to mount a pedestrian protection device for reducing an impact and harm to the pedestrian.

The pedestrian protection device is for example operated by receiving a signal from a collision detecting sensor mounted on the vehicle. As the collision detecting sensor, an optical fiber sensor having an optical fiber is used. The optical fiber is generally arranged at the bumper of the vehicle.

The optical fiber sensor detects a stress applied to the optical fiber based on a change of light transmitting in the optical fiber. When the optical fiber is deformed by receiving an external stress, a characteristic, such as an intensity or a phase, of the light passing through a deformed portion of the optical fiber changes. Therefore, the light after passing through the optical fiber has the characteristic different as that before passing through the optical fiber. Accordingly, a collision of the vehicle is determined by detecting the stress applied to the optical fiber based on the characteristic change of the light passing through the optical fiber.

The optical fiber sensor generally has a light emitting means for emitting light to one end of the optical fiber, and a light receiving means for receiving light radiated from an opposite end of the optical fiber therein. Further, the optical fiber sensor has a calculation means for calculating the stress applied to the optical fiber based on the light emitted from the light emitting means and the light received in the light receiving means.

In this kind of collision detecting sensor, it is important to accurately detect the collision, particularly, the collision of the pedestrian. If the collision detecting sensor is erroneously operated due to internal failure and the like, the pedestrian protection device will not be accurately operated. Thus, it is difficult to reduce harm to the pedestrian. Further, it may influence on a driving operation of a driver of the vehicle, causing a secondary accident.

In the conventional collision detecting sensor, an initial check is performed in each of the light emitting means and the light receiving means. However, the initial check is not performed through the whole of the sensor. Particularly, the optical fiber sensor performs a sensing operation based on the condition of the light travelling in the optical fiber. If the optical fiber has a damage, a characteristic change of the light resulting from the damage will be erroneously determined as a characteristic change caused by a collision.

From US 6,271,747 B1 there is known a vehicle occupant protection device including an optical fiber as a crash sensor. The device has the disadvantage that a broken optical fiber might result in a crash signal indicating a collision of the vehicle.

From US 4,870,269 it is known to check continuously whether a sensor connected to a control unit via an optical fiber is in a normal state of operation.

From US 2005/0006151 A1 there is known an optical sensor for determining a load on a seat. It is also described that a computer may decide whether the load is suitable for safe deployment of an automatic restraining device.

The present invention is made in view of the forgoing matter, and it is an object of the present invention to provide an optical fiber sensor for a vehicle capable of reducing an operation error. The invention is defined in the accompanying claims.

According to an aspect of the present invention, the optical fiber sensor has an optical fiber, a light emitting means, a light receiving means and a calculation means. The optical fiber is disposed to extend on a peripheral part of the vehicle. The light emitting means is connected to a first end of the optical fiber for emitting a light to the first end of the optical fiber. The light receiving means is connected to a second end of the optical fiber for receiving a light radiated from the second end of the optical fiber. The calculation means is connected to the light emitting means and the light receiving means. The calculation means outputs a signal to the light emitting means to emit the light from the light emitting means. The calculation means receives a signal outputted from the light receiving means when the light receiving means receives the light from the optical fiber. The calculation means determines a condition change of the optical fiber based on a characteristic of the light emitted from the light emitting means and a characteristic of the light received in the light receiving means so as to detect a collision of the vehicle. At a time of starting an operation of the optical fiber sensor, the calculation means performs an initial check. Namely, the calculation means operates the light emitting means to emit the light to the optical fiber, and compares the characteristic of the light received in the light receiving means to the characteristic of the light emitted from the light emitting means.

Accordingly, a condition of the whole of the optical fiber sensor is initially checked at the time of starting the operation. If an abnormal condition of the optical fiber sensor is detected by the initial check, it can be warned through an external device. Therefore, it is possible to stop to use the optical fiber sensor. Accordingly, the vehicle optical fiber sensor of the present invention reduces an operation error.

Other objects, features and advantages of the present invention will become more apparent from the following detailed description made with reference to the accompanying drawings, in which like parts are designated by like reference numbers and in which:
Fig. 1 is a schematic cross-sectional view of an optical fiber sensor according to an example embodiment of the present invention;
Fig. 2 is an exploded perspective view of the optical fiber sensor mounted to a front part of a vehicle according to the example embodiment of the present invention;
Fig. 3 is a perspective view of the optical fiber sensor mounted to the front part of the vehicle, partly in cross-section, according to the example embodiment of the present invention;
Fig. 4 is a graph showing the intensity of a light emitted from a light emitting means of the optical fiber sensor for an initial check according to the example embodiment of the present invention;
Fig. 5 is a graph showing the intensity of a light received in a light receiving means of the optical fiber sensor for the initial check according to the example embodiment of the present invention;
Fig. 6 is a graph showing the intensity of the light emitted from the light emitting means for the initial check according to a modified embodiment of the present invention;
Fig. 7 is a graph showing the intensity of the light received in the light receiving means for the initial check according to the modified example embodiment of the present invention;
Fig. 8 is a graph showing the intensity of the light emitted from the light emitting means for the initial check according to another modified embodiment of the present invention; and
Fig. 9 is a graph showing the intensity of the light received in the light receiving means for the initial check according to the another modified embodiment of the present invention.

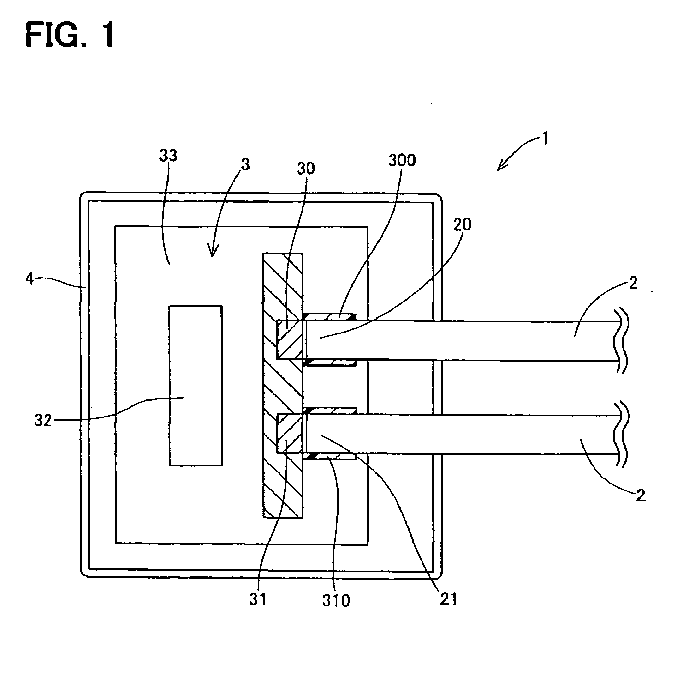

Hereafter, an example embodiment of the present invention will be described with reference to Figs. 1 to 5. In the example embodiment, the optical fiber sensor of the present invention is exemplary employed as a collision detecting sensor for a vehicle for detecting a collision of the vehicle.

First, a general structure of the optical fiber sensor will be described with reference to Fig. 1. The optical fiber sensor 1 has an optical fiber 2 and a light emitting and receiving means 3. The light emitting and receiving means 3 is composed of a light emitting means connected to a first end 20 of the optical fiber 2 and a light receiving means connected to a second end 21 of the optical fiber 2. The light emitting means emits light to the first end 20 of the optical fiber 2 so that the light travels in the optical fiber 2. The light receiving means receives light radiated from the second end 21 of the optical fiber 2.

The optical fiber 2 is for example a wire plastic fiber having a core portion and a clad portion. Further, the optical fiber sensor 1 has an ECU 32 mounted on a board 33 an serving as a calculation means.

The light emitting means includes a light emitting diode (hereafter, referred to as LED) 30. The light receiving means includes a photo diode (hereafter, referred to as PD) 31. The LED 30 and the PD 31 are fixed on the board 33.

The LED 30 has a light emitting portion through which the light is radiated. The LED 30 is arranged such that the light emitted from the light emitting portion is radiated to an end surface of the first end 20 of the optical fiber 2. The PD 31 has a light receiving portion for receiving the light radiated from the second 21 of the optical fiber 2 therein. The PD 31 is arranged such that the light radiated from the second end 21 of the optical fiber 2 is received therein through the light receiving portion. For example, the LED 30 and the PD 31 are arranged on the board 33 such that an axis of the light emitted from the light emitting portion and an axis of the light radiated from the second end 21 of the optical fiber 2 are parallel to a plane surface of the board 33.

A first cylindrical member 300 and a second cylindrical member 310 are provided at the light emitting portion and the light receiving portion, respectively. The first end 20 of the optical fiber 2 is inserted and fixed in the first cylindrical member 300 to be connected to the light emitting portion. Likewise, the second end 21 of the optical fiber 2 is inserted and fixed in the second cylindrical member 310 to be connected to the light receiving portion. The first end 20 and the second end 21 are slightly separated from the light emitting portion and the light receiving portion so as to reduce damage to the LED 30 and the PD 31 due to contact stress.

The ECU 32 connects to the LED 30 and the PD 31. The ECU 32 controls the LED 30. For example, the ECU 32 controls an electric current passing through the LED 30, to thereby control an intensity of light emitted from the LED 30 and a light emitting time of the LED 30.

Also, the ECU 32 receives a signal outputted from the PD 31 and calculates an intensity of light received in the PD 31 and a light receiving time of the PD 31. Further, the ECU 32 calculates a stress applied to the optical fiber 2 based on the light emitted from the LED 30 and the light received in the PD 31. For example, the ECU 32 calculates the stress by comparing the electric current passing through the LED 30 to an electric current produced from the PD 31.

The light emitting and receiving means 3 and the ends 20, 21 of the optical fiber 2 are housed in a case 4 having a substantially box shape. For example, the case 4 has a first part and a second part connected to each other to form the cavity therein. The second part is formed with a fixing means (not shown) for fixing the board 33, and the ends 20, 21 of the optical fiber 2 therein. Also, the case 4 is formed with through holes for passing through the optical fiber 2 on a wall that is opposed to the light emitting portion of the LED 30 and the light receiving portion of the PD 31. The through holes are formed at connecting portions between the first part and the second part.

In the case 4, the first end 20 and the second end 21 of the optical fiber 2 are connected to the light emitting and receiving means 3 in a condition that the first end 20 and the second end 21 are inserted in the first cylindrical member 300 and the second cylindrical member 310, respectively. In this condition, the portions of the optical fiber 2 that are adjacent to the first and second ends 20, 21 pass through the through holes formed on the wall of the case 4, respectively.

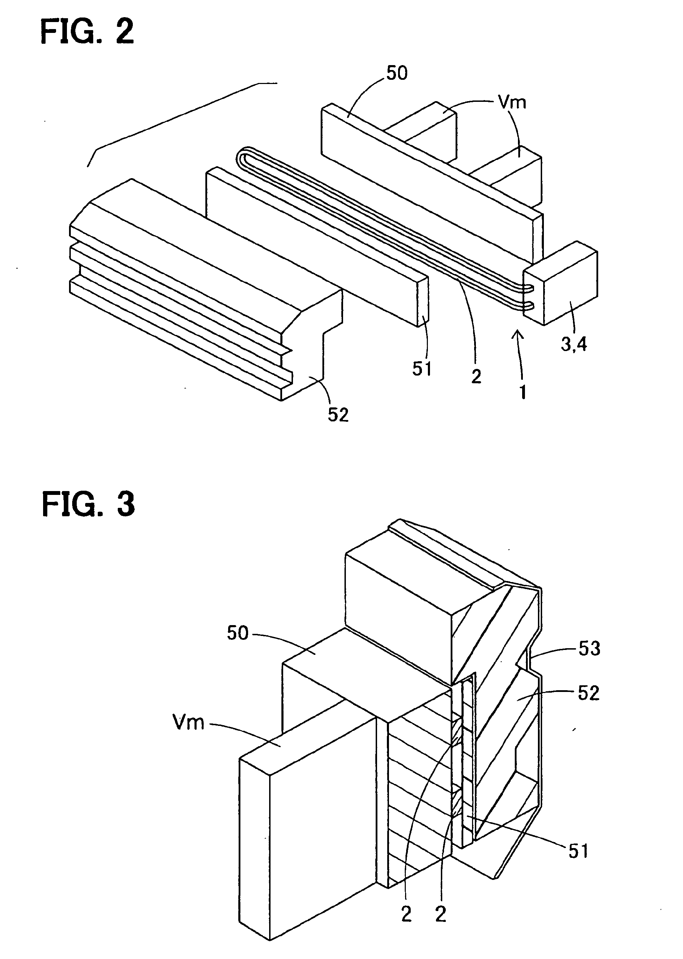

The above optical fiber sensor 1 is mounted to a front part of the vehicle for detecting a collision at a bumper. In the example embodiment, the bumper is for example located at a front part of an engine compartment. As shown in Figs. 2 and 3, the optical fiber 2 is arranged to extend in a right and left direction of the vehicle between the bumper and a bumper reinforcement member 50.

The bumper reinforcement member 50 is fixed to front side members Vm provided on the vehicle. The bumper is composed of a bumper cover 53 and a bumper absorber 52 for absorbing an impact applied to the bumper. The bumper absorber 52 is made of an elastic material such as a foamed resin. Further, a load plate 51, having a substantially plate shape, is arranged between the absorber 52 and the optical fiber 2 for transmitting the impact to the optical fiber 2.

The optical fiber 2 extends in the right and left direction of the vehicle along a front surface of the bumper reinforcement member 50. The case 4 of the optical fiber sensor 1 is for example arranged adjacent to an end of the bumper reinforcement member 50.

In this example embodiment, the ECU 32 also serves as a calculation means of a collision safety system that is provided to protect the pedestrian at the time of the collision. When it is determined that an object collided with the bumper 6 is the pedestrian, a protection device of the collision safety system is operated by the ECU 32. Here, the protection device of the collision safety system is for example a pillar air bag or a hood air bag. The protection device may include another device for protection the collision object.

In the optical fiber sensor 1, when an ignition switch of the vehicle is turned on, the ECU 32 is operated and performs an initial check. In the initial check, first, the ECU 32 outputs a light emitting signal to the LED 30, so the LED 30 emits the light to the end surface of the first end 20 of the optical fiber 2. The light travels in the optical fiber 2 and is radiated from the end surface of the second end 21 to the PD 31.

In the PD 31, the light received therein is converted into an electric signal. The electric signal is sent to the ECU 32 as a light receiving signal. In the ECU 32, the light receiving signal is compared to the light emitting signal, so as to determine whether the optical fiber sensor 1 is in a normal condition or in an abnormal condition. Accordingly, the condition of the optical fiber sensor 1 is determined through the initial check.

If it is determined that the vehicle optical fiber sensor 1 is in the abnormal condition in the initial check, the ECU 32 can perform the initial check again. Further, the ECU 32 warns the abnormal condition to an external device.

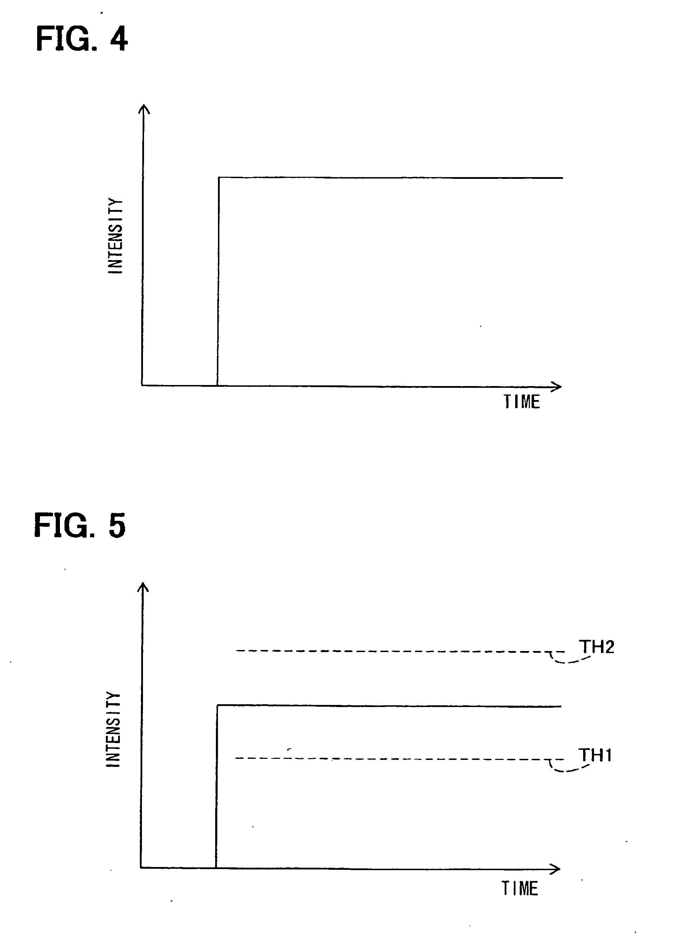

In the initial check, the ECU 32 supplies the LED 30 with a predetermined amount of constant electric current. Thus, the LED 30 emits the light having a constant intensity. That is, the light having the constant intensity is emitted to the optical fiber 2 for the initial check. The light emitted from the LED 30 is shown in Fig. 4.

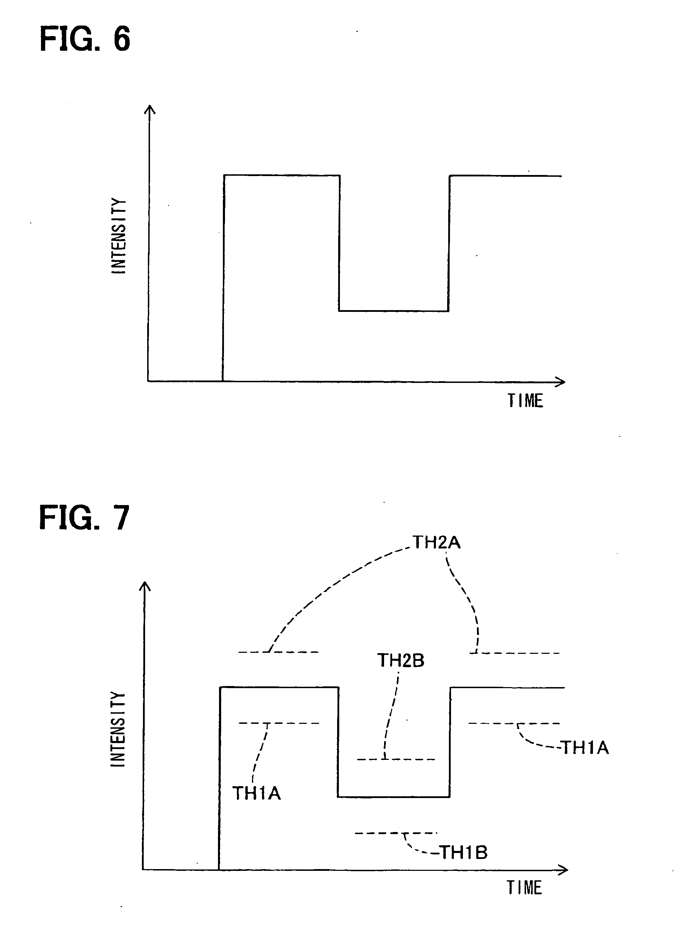

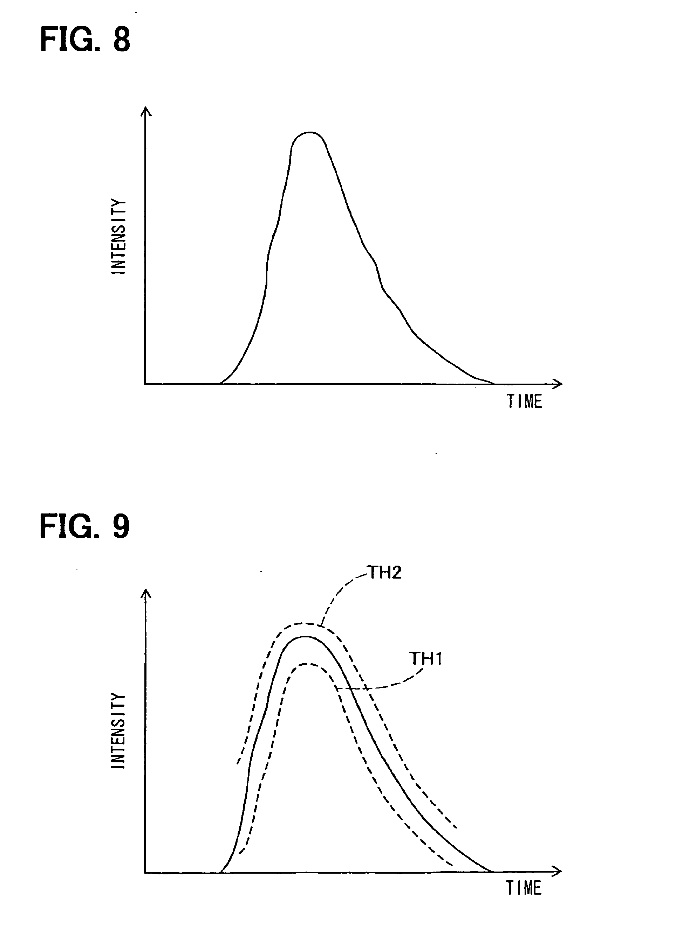

The PD 31 receives the light passed through the optical fiber 2. The light received in the PD 31 has a constant intensity, as shown in Fig. 5. Here, graphs of Figs. 4 and 5 show the relative change of the intensity of light with the time, and are not used for comparing the intensities of the lights. This relationship is also applied to the following graphs of Figs. 6 and 7 and the following graphs of Figs. 8 and 9.

For example, the ECU 32 compares the intensity of the light received in the PD 31 to a predetermined threshold for the determination. The predetermined threshold is determined according to the intensity of the light emitted from the LED 30. Specifically, the ECU 32 determines whether the intensity of the light received in the PD 31 is within a predetermined range between a first threshold value TH1 and a second threshold value TH2.

When the intensity of the light received in the PD 31 is in the predetermined range, the ECU 32 determines that the collision detecting sensor 1 is in the normal condition. On the contrary, when the intensity of the light received in the PD 31 is not within the predetermined range, the ECU 32 determines that the collision detecting sensor 1 is in the abnormal condition.

The ECU 32 can determine the condition by continuously comparing the light emitted from the LED 30 to the light received in the PD 31. Alternatively, the ECU 32 can determine the condition by comparing the intensity of the light received in the PD 31 to the intensity of the light emitted from the LED 30 at a predetermined time after the starting of the operation.

Accordingly, the condition of the optical fiber sensor 1 is detected by performing the initial check when the ignition switch is turned on. As a result, a possibility of causing an operation error during the use reduces.

The initial check of the above example embodiment can be modified as follows. In the above example embodiment shown in Figs. 4 and 5, the light emitted from the LED 30 during the initial check has the constant intensity. In a modified embodiment, the light emitted from the LED 30 for the initial check has at least two different intensities, as shown in Fig. 6.

For example, the LED 30 emits a continuous light having different intensities including a high intensity part and a low intensity part. Specifically, the light emitted from the LED 30 has a rectangular waveform having two different intensities.

Accordingly, the light received in the PD 31 has a change of intensity in the similar rectangular waveform. The intensity of the light received in the PD 31 is shown in Fig. 7. As shown in Fig. 7, the light received in the PD 31 is a continuous light having two different intensities, i.e., having a high intensity part and a low intensity part.

In this modified embodiment, the threshold values TH1, TH2 are predetermined in the rectangular waveform. That is, the threshold values TH1, TH2 have levels TH1A, TH2A as the high intensity part and levels TH1 B, TH2B as the low intensity part, respectively. Thus, in the ECU 32, the condition of the optical fiber sensor 1 is determined by using the different levels of the threshold values TH1A, TH 1 B, TH2A, TH2B.

In the initial check of the modified embodiment, the ECU 32 determines the condition based on the intensities at different time points after the start of the light emitting operation. Namely, the intensity of the light at the high intensity part is determined whether it is within a range between the value TH1A and the value TH2A, and the intensity of the light at the low intensity part is determined whether it is within a range between the value TH1B and the value TH2B.

Also in this embodiment, the initial check is performed in a manner similar to that of the above embodiment, except that the light emitted from the LED 30 has the two different intensities. Accordingly, effects similar to those of the embodiment shown in Figs. 4 and 5 can be provided. Furthermore, the determination is made by comparing the intensity of the light to the threshold values TH1A, TH1B, TH2A, TH2B, at two different time points, i.e., at the high intensity part and the low intensity part. Accordingly, determination accuracy further improves.

The initial check of the above example embodiments will be further modified as shown in Figs. 8 and 9. In a modified embodiment shown in Figs. 8 and 9, the light emitted from the LED 30 in the initial check has an intensity change that has a curve similar to that when the bumper of the vehicle actually collides with an external object. As shown in Fig. 8, the LED 30 emits the light in a form of substantially pulse.

Accordingly, the light received in the PD 31 has an intensity change in a form of substantially pulse similar to that of Fig. 8. The intensity of the light received in the PD 31 is shown in Fig. 9.

In this modified embodiment, the threshold levels TH1, TH2 of the ECU 32 are predetermined in the forms of substantially pulse. In the ECU 32, the condition of the optical fiber sensor 1 is determined based on the threshold values TH1, TH2.

The ECU 32 can determine the condition of the optical fiber sensor 1 by continuously comparing the light emitted from the LED 30 to the light received in the PD 31. Alternatively, the ECU 32 can determine the condition by comparing the intensities of the lights at a predetermined time period after the start of emitting the light.

In this embodiment, the initial check is performed in a manner similar to that of the above example embodiments, except that the light emitted from the LED 30 has the same intensity change as the light obtained at the time of actual collision. Accordingly, effects similar to those of the above example embodiments can be provided. Further, since the light having the same intensity change as that of the light obtained at the time of the actual collision is used, this embodiment further provides an advantageous effect of improving the determination accuracy in the actual collision detection.

The optical fiber sensor 1 has the light emitting and receiving means 3 and the optical fiber 2. The structures of the light emitting and receiving means 3 and the optical fiber 2 are not limited to the example embodiment shown in Figs. 1 to 3. Also, the light emitting means and the light receiving means are not limited to the LED 30 and the PD 31.

In the above example embodiments, the optical fiber 2 is arranged at the front bumper of the vehicle. However, the position of the optical fiber 2 is not limited to the front bumper. The optical fiber 2 can be arranged at another outer peripheral part of the vehicle for detecting a collision at the another peripheral part of the vehicle.

The optical fiber 2 is not limited to the plastic fiber. A glass fiber can be used as the optical fiber 2 as long as it has a core portion and a clad portion having different refraction factors. Further, the difference of the refraction factors of the core portion and the clad portion is not particularly limited. Further, a diameter and a length of the optical fiber 2 are not particularly limited. An optical fiber used in a conventional optical fiber sensor can be used as the optical fiber 2 of the optical fiber sensor 1 of the present invention.

In the above described embodiments, at the time of starting the operation of the vehicle, the light emitting means is operated to emit the light, and the light is actually transmitted to the optical fiber 2. Also, the light received in the light receiving means is compared to the light emitted from the light emitting means. Accordingly, the condition of the optical fiber sensor 1 is wholly checked through the initial check.

The time of starting the operation is a time when the vehicle optical fiber sensor 1 starts the operation. Namely, it is a time when a power supply to the optical fiber sensor 1 is started. Specifically, it is a time when an operation of the vehicle is started, i.e., is a timing when the ignition switch of the vehicle is turned on.

In the initial check, the light is transmitted in the optical fiber 2 and the light before passing through the optical fiber 2 and the light after passing through the optical fiber 2 are compared, at least. The type of light passing through the optical fiber is not limited to the above example embodiments shown in Figs. 4 to 9. The lights can be compared based on any characteristics of the light such as a wavelength, the intensity and the light emitting time, as long as the condition of the optical fiber 2 can be checked.

The vehicle optical fiber sensor 1 generally performs the sensing operation by comparing the intensity of the light before passing through the optical fiber 2 to the intensity of the light after passing through the optical fiber 2. The initial check is performed by using a method used for the general sensing operation. Accordingly, the initial check is simply performed.

## Claims

1. An optical fiber sensor (1) for a vehicle, comprising:
an optical fiber (2) disposed at an outer peripheral part of the vehicle;
a light emitting means (30) connected to a first end (20) of the optical fiber (2) for emitting light to the first end (20) of the optical fiber (2);
a light receiving means (31) connected to a second end (21) of the optical fiber (2) for receiving light radiated from a second end (21) of the optical fiber (2); and
a control means (32) connected to the light emitting means (30) and the light receiving means (31), wherein the control means (32) is adapted to output a signal to the light emitting means (30) to emit the light from the light emitting means (30) and to receive a signal from the light receiving means (31) relative to the light received in the light receiving means (31), and is adapted to determine a stress applied to the optical fiber (2) based on the light emitted from the light emitting means (30) and the light received in the light receiving means (31) so as to detect a collision, the optical fiber sensor (1) **characterized in that**
the control means (32) is adapted to perform an intial check so as to determine whether the optical fiber sensor (1) is in a normal condition or in an abnormal condition at a time of starting an operation thereof by outputing the signal to the light emitting means (30) for emitting the light to the optical fiber (2) and determining whether an intensity of the light received in the light receiving means (31) is within a predetermined range between a first threshold value (TH 1; TH1A, TH1B) and a second threshold value (TH2; TH2A, TH2B) that is higher than the first threshold value (TH1; TH1A, TH1B), the first threshold value (TH1; TH1A, TH1B) and the second threshold value (TH2; TH2A, TH2B) being predetermined according to an intensity of the light emitted from the light emitting means (30), and
when the intensity of the light received in the light receiving means (31) is within the predetermined range, the control means (32) is adapted to determine that the optical fiber sensor (1) is in the normal condition.

2. The optical fiber sensor (1) according to claim 1, wherein in the initial check, an intensity of the light emitted from the light emitting means (30) and an intensity of the light received in the light receiving means (31) are compared.

3. The optical fiber sensor (1) according to claim 1 or 2, wherein the light emitted from the light emitting means (30) in the initial check has different intensities.

4. The optical fiber sensor (1) for the vehicle according to claim 1 or 2, wherein the light emitted from the light emitting means (30) in the initial check has a wave form similar to that of a light that is detected at a time of a collision.

5. The optical fiber sensor (1) according to claim 3, wherein
in the initial check, the light emitted from the light emitting means (30) includes a high intensity part and a low intensity part that is lower than the high intensity part, and
the first threshold value (TH1) includes a first level (TH1A) and a second level (TH1B) that is lower than the first level (TH1A),
the second threshold velue (TH2) includes a first level (TH2A) and a second level (TH2B) that is lower than the first level (TH2A), and
it is determined whether the intensity of the light at the high intensity part is within a range between the first level (TH1A) of the first threshold value and the first level of the second threshold value (TH2) and whether the intensity of the light at the low intensity part is within a range between the second level (TH I B) of the first threshold value (TH1) and the second level (TH2B) of the second threshold value (TH2).

## Patentansprüche

1. Lichtleitersensor (1) für ein Fahrzeug, aufweisend:
einen Lichtleiter (2), der an einem außenseitigen Teil des Fahrzeugs angeordnet ist;
ein Lichtemissionsmittel (30), das mit einem ersten Ende (20) des Lichtwellenleiters (2) zum Emittieren von Licht zu dem ersten Ende (20) des Lichtwellenleiters (20) verbunden ist;
ein Lichtempfangsmittel (31), das mit einem zweiten Ende (21) des Lichtwellenleiters (2) zum Empfangen von einem zweiten Ende (21) des Lichtwellenleiters (2) abgestrahlten Lichts verbunden ist; und
ein Steuermittel (32), das mit dem Lichtemissionsmittel (30) und dem Lichtempfangsmittel (31) verbunden ist, wobei das Steuermittel (32) dafür eingerichtet ist, ein Signal an das Lichtemissionsmittel (30) auszugeben zum Emittieren des Lichts von dem Lichtemissionsmittel (30) und zum Empfangen eines Signals von dem Lichtempfangsmittel (31) relativ zu dem in dem Lichtempfangsmittel (31) empfangenen Licht, und das dafür eingerichtet ist, eine auf den Lichtwellenleiter (2) ausgeübte Verspannung zu bestimmen auf der Grundlage des von dem Lichtemissionsmittel (30) emittierten Lichts und des in dem Lichtempfangsmittel (31) empfangenen Lichts, um so eine Kollision zu erfassen, wobei der optische Lichtwellenleitersensor (1) **dadurch gekennzeichnet ist, dass**
das Steuermittel (32) dafür eingerichtet ist, eine Anfangsüberprüfung durchzuführen, um zu bestimmen, ob der optische Lichtwellenleiter (1) in einem normalen Zustand oder in einem anormalen Zustand ist zu einer Zeit des Beginns eines Betriebs davon durch Abgeben des Signals an das Lichtemissionsmittel (30) zum Emittieren des Lichts an den Lichtwellenleiter (2) und Bestimmen, ob eine Intensität des in dem Lichtempfangsmittel (31) empfangenen Lichts innerhalb eines vorbestimmten Bereichs zwischen einem ersten Schwellwert (TH1; TH1A, TH1B) und einem zweiten Schwellwert (TH2; TH2A, TH2B) ist, der höher ist als der erste Schwellwert (TH1; TH1A, TH1B), wobei der erste Schwellwert (TH1; TH1A, TH1B) und der zweite Schwellwert (TH2; TH2A, TH2B) gemäß einer Intensität des von dem Lichtemissionsmittel (30) emittierten Lichts vorbestimmt sind, und
wenn die Intensität des in dem Lichtempfangsmittel (31) empfangenen Lichts innerhalb des vorbestimmten Bereichs ist, das Steuermittel (32) dafür eingerichtet ist, zu bestimmen, dass der Lichtwellenleitersensor (1) in dem normalen Zustand ist.

2. Lichtwellenleitersensor (1) gemäß Anspruch 1, wobei bei der Anfangsüberprüfung eine Intensität des von dem Lichtemissionsmittel (30) emittierten Lichts und eine Intensität des in dem Lichtempfangsmittel (31) empfangenen Lichts verglichen werden.

3. Lichtwellenleiter (1) gemäß Anspruch 1 oder 2, wobei das von dem Lichtemissionsmittel (30) emittierte Licht bei der Anfangsüberprüfung verschiedene Intensitäten aufweist.

4. Lichtwellenleitersensor (1) für das Fahrzeug gemäß Anspruch 1 oder 2, wobei das von dem Lichtemissionsmittel (30) emittierte Licht bei der Anfangsüberprüfung eine Wellenform besitzt, die gleich der eines Lichts ist, das zu der Zeit einer Kollision detektiert wird.

5. Lichtwellenleitersensor (1) gemäß Anspruch 3, wobei
bei der Anfangsüberprüfung das von dem Lichtemissionsmittel (30) emittierte Licht einen Hochintensitätsanteil und einen Niedrigintensitätsanteil, der geringer ist als der Hochintensitätsanteil, besitzt und
der erste Schwellwert (TH1) einen ersten Pegel (TH1A) und einen zweiten Pegel (TH1B), der geringer ist als der erste Pegel (TH1A), besitzt,
der zweite Schwellwert (TH2) einen ersten Pegel (TH2A) und einen zweiten Pegel (TH2B), der geringer ist als der erste Pegel (TH2A), besitzt und
bestimmt wird, ob die Intensität des Lichts bei dem Hochintensitätsanteil innerhalb eines Bereichs zwischen dem ersten Pegel (TH1A) des ersten Schwellwertes und dem ersten Pegel des zweiten Schwellwertes (TH2) ist und ob die Intensität des Lichtes bei dem Niedrigintensitätsanteil innerhalb eines Bereichs zwischen dem zweiten Pegel (TH1B) des ersten Schwellwertes (TH1) und dem zweiten Pegels (TH2B) des zweiten Schwellwertes (TH2) ist.

## Revendications

1. Capteur à fibres optiques (1) pour un véhicule, comprenant :
une fibre optique (2) disposée au niveau d'une partie périphérique extérieure du véhicule ;
un moyen (30) d'émission de lumière relié à une première extrémité (20) de la fibre optique (2) pour émettre la lumière à la première extrémité (20) de la fibre optique (2) ;
un moyen (31) de réception de lumière relié à une deuxième extrémité (21) de la fibre optique (2) permettant de recevoir la lumière émanant d'une deuxième extrémité (21) de la fibre optique (2) ; et
un moyen de commande (32) relié au moyen (30) d'émission de lumière et au moyen (31) de réception de lumière, où le moyen de commande (32) est adapté pour délivrer en sortie un signal au moyen (30) d'émission de lumière pour émettre la lumière à partir du moyen (30) d'émission de lumière et pour recevoir un signal à partir du moyen (31) de réception de lumière par rapport à la lumière reçue dans le moyen (31) de réception de lumière, et est adapté pour déterminer une contrainte appliquée sur la fibre optique (2) sur la base de la lumière émise à partir du moyen (30) d'émission de lumière et de la lumière reçue dans le moyen (31) de réception de lumière de manière à détecter une collision, le capteur à fibres optiques (1) **caractérisé en ce que**
le moyen de commande (32) est adapté pour effectuer un contrôle initial de manière à déterminer si le capteur à fibres optiques (1) est dans un état normal ou dans un état anormal au moment du démarrage de son fonctionnement en délivrant en sortie le signal au moyen (30) d'émission de lumière pour émettre la lumière à la fibre optique (2) et déterminer si une intensité de la lumière reçue dans le moyen (31) de réception de lumière est dans une plage prédéterminée entre une première valeur seuil (TH1 ; TH1A, TH1B) et une deuxième valeur seuil (TH2 ; TH2A, TH2B) qui est supérieure à la première valeur seuil (TH1 ; TH1A, TH1B), la première valeur seuil (TH1 ; TH1A, TH1B) et la deuxième valeur seuil (TH2 ; TH2A, TH2B) étant prédéterminées en fonction d'une intensité de la lumière émise à partir du moyen (30) d'émission de lumière, et
lorsque l'intensité de la lumière reçue dans le moyen (31) de réception de lumière est dans la plage prédéterminée, le moyen de commande (32) est adapté pour déterminer que le capteur à fibres optiques (1) est dans l'état normal.

2. Capteur à fibres optiques (1) selon la revendication 1, dans lequel dans le contrôle initial, une intensité de la lumière émise à partir du moyen (30) d'émission de lumière et une intensité de la lumière reçue dans le moyen (31) de réception de lumière sont comparées.

3. Capteur à fibres optiques (1) selon la revendication 1 ou 2, dans lequel la lumière émise à partir du moyen (30) d'émission de lumière dans le contrôle initial présente des intensités différentes.

4. Capteur à fibres optiques (1) pour le véhicule selon la revendication 1 ou 2, dans lequel la lumière émise à partir du moyen (30) d'émission de lumière dans le contrôle initial présente une forme d'onde semblable à celle d'une lumière qui est détectée au moment d'une collision.

5. Capteur à fibres optiques (1) selon la revendication 3, dans lequel
dans le contrôle initial, la lumière émise à partir du moyen (30) d'émission de lumière comporte une partie de haute intensité et une partie de faible intensité qui est inférieure à la partie de haute intensité, et
la première valeur seuil (TH1) comporte un premier niveau (TH1A) et un deuxième niveau (TH1B) qui est inférieur au premier niveau (TH1A),
la deuxième valeur seuil (TH2) comporte un premier niveau (TH2A) et un deuxième niveau (TH2B) qui est inférieur au premier niveau (TH2A), et
on détermine si l'intensité de la lumière au niveau de la partie de haute intensité est dans une plage entre le premier niveau (TH1A) de la première valeur seuil et le premier niveau de la deuxième valeur seuil (TH2) et si l'intensité de la lumière au niveau de la partie de faible intensité est dans une plage entre le deuxième niveau (TH1B) de la première valeur seuil (TH1) et le deuxième niveau (TH2B) de la deuxième valeur seuil (TH2).
